# EUROPÄISCHE PATENTSCHRIFT

(11) **EP 2 922 602 B1**
(45) Veröffentlichungstag und Bekanntmachung des Hinweises auf die Patenterteilung: **06.06.2018**
(21) Anmeldenummer: 14792450.0
(22) Anmeldetag: 28.10.2014
(51) Int. Cl.: B01D 1/22, B01D 3/34

(54) **VORRICHTUNG UND VERFAHREN FÜR DEN KONTAKT EINER GASPHASE MIT EINEM FLÜSSIGEN MEDIUM**
DEVICE AND METHOD FOR THE CONTACT OF A GAS PHASE WITH A LIQUID MEDIUM
DISPOSITIF ET PROCÉDÉ POUR LA MISE EN CONTACT D'UNE PHASE GAZEUSE AVEC UN MILIEU LIQUIDE

(30) Priorität: 04.11.2013 DE 102013222343
(43) Veröffentlichungstag der Anmeldung: 30.09.2015
(73) Patentinhaber: Enzenhofer, Matthias, 74076 Heilbronn (DE); Gruber, Siegfried, 33378 Rheda-Wiedenbrück (DE)
(72) Erfinder: Enzenhofer, Matthias, 74076 Heilbronn (DE); Gruber, Siegfried, 33378 Rheda-Wiedenbrück (DE)
(74) Vertreter: Glawe, Delfs, Moll
(86) Internationale Anmeldenummer: PCT/EP2014/073101
(87) Internationale Veröffentlichungsnummer: WO 2015/063076

(56) Entgegenhaltungen:
- EP-A1- 0 288 064
- DE-A1- 3 122 026
- DE-B- 1 117 051
- DE-B- 1 262 908
- DE-C- 687 142
- GB-A- 548 281
- US-A- 3 737 378
- US-A- 4 276 124
- US-A- 4 867 849

## Beschreibung

Die Erfindung betrifft eine Vorrichtung für den Kontakt einer Gasphase mit einem flüssigen Medium sowie ein Verfahren zum Betrieb der Vorrichtung.

Das Kontaktieren einer Gasphase mit einem flüssigen Medium kann in der Praxis in vielen Bereichen Anwendung finden. Zum Beispiel kann der Kontakt einer Gasphase mit einer Flüssigkeit verwendet werden, um flüchtige Substanzen aus einer Flüssigkeit zu entfernen. Damit kann beispielsweise zum einen die Flüssigkeit gereinigt werden und zum anderen können die in der Flüssigkeit gelösten flüchtigen Komponenten gesammelt und beispielsweise nach einer Wiederaufbereitung wiederverwendet werden.

Das Entfernen flüchtiger Komponenten aus einer Flüssigkeit kann konventionell z. B. durch Destillation geschehen. Dabei wird eine Flüssigkeit, die neben einer schwerer flüchtigen Komponente mindestens eine leichter flüchtige Komponente enthält, erhitzt, so dass überwiegend die leichter flüchtige Komponente verdampft, während die schwerer flüchtige Komponente zurückbleibt. Die verdampfte leichter flüchtige Komponente kann aus der Dampfphase mittels Kühlung als Flüssigkeit zurückgewonnen werden. Nachteilig an einem solchen Destillationsverfahren sind der notwendige Zeit- und Energieaufwand.

Alternativ können flüchtige Komponenten aus einer Flüssigkeit auch mittels einer Festbettanlage entfernt werden. Dabei wird die Flüssigkeit über ein Festbett, z. B. eine Füllkörperkolonne, geleitet. Durch das Festbett wird Gas, z. B. Luft, im Gegenstrom eingeleitet, um eine Abtrennung der flüchtigen Komponente zu erreichen. Nachteilig an einer solchen Anordnung ist, dass es an der Festbettanlage zu Inkrustierungen durch ausfallende Feststoffe kommen kann und die Anlage aufwendig von den Inkrustierungen befreit werden muss, um die Funktionsfähigkeit der Anlage zu erhalten.

Der Kontakt einer Gasphase mit einem flüssigen Medium kann beispielsweise auch dazu verwendet werden, das Gas mit dem flüssigen Medium zu befeuchten. Konkret kann so beispielsweise Luft mit Wasser befeuchtet werden, um ein angenehmeres Raumklima zu schaffen. Um bei Raumtemperatur die Luft ausreichend zu befeuchten, bedarf es einer großen Verdunstungsfläche, die üblicherweise nicht zur Verfügung steht.

DE 31 22 026 A1 offenbart eine Vorrichtung zur Nassreinigung von feststoffbeladenen Gasen, die eine rotierende Rundbürste umfasst, in die Waschflüssigkeit zur Gasreinigung verteilt wird. DE 687 142 A offenbart eine Destillationsvorrichtung, die eine Standröhre umfasst, in der sich eine mit Bürsten besetzte Hohlwelle erstreckt. An der Wand der Standröhre fließt Flüssigkeit in einer dünnen Schicht abwärts, während aus der Flüssigkeit frei werdende Dämpfe durch die Bürste aufwärts ziehen.

Um die oben genannten Nachteile zu vermeiden, wird in einem ersten Aspekt eine Vorrichtung gemäß Anspruch 1 vorgeschlagen. Die abhängigen Ansprüche betreffen weitere vorteilhafte Ausführungsformen der Erfindung.

In einer Ausführungsform ist die Fördereinrichtung als archimedische Schraube ausgebildet, wobei die Bürste an der Fördervorrichtung angebracht ist und mit dieser drehbar ist. Alternativ kann die Fördervorrichtung eine andere Pumpvorrichtung beinhalten.

In einer vorteilhaften Ausführungsform umfasst die Vorrichtung zumindest einen zweiten Zulauf für das flüssige Medium.

In einer bevorzugten Ausführungsform weist die Vorrichtung im mittleren Bereich zumindest einen in Richtung der Fördervorrichtung vorstehenden Teil auf, der derart ausgebildet ist, dass er mit der Bürste zumindest teilweise in Kontakt kommt.

Die Borsten bestehen bevorzugt aus einem elastischen Material. In einer bevorzugten Ausführungsform der Erfindung weisen die Borsten eine poröse Oberfläche auf. In einer weiteren vorteilhaften Ausführungsform weist die Vorrichtung Borsten auf, die hohl sind. Die Bürste und die Fördervorrichtung sind dabei besonders vorteilhaft derart ausgebildet, dass die hohlen Borsten zumindest teilweise mit dem flüssigen Medium aus der Fördervorrichtung gespeist werden.

In einem zweiten Aspekt der Erfindung wird ein Verfahren für den Kontakt einer Gasphase mit einem flüssigen Medium gemäß Anspruch 9 vorgeschlagen.

Über die Fördervorrichtung gelangt das flüssige Medium in den oberen Bereich der Vorrichtung und verrieselt mittels des Verteilungsmittels über der Bürste. Mit dem Rotationsantrieb für die Fördervorrichtung wird bevorzugt gleichzeitig die Bürste in Drehung versetzt. Die verrieselte Flüssigkeit bewegt sich aufgrund der Schwerkraft zurück in den unteren Bereich der Vorrichtung und benetzt dabei die Borsten der Bürste. Die Borsten dienen dabei als Verdunstungsoberfläche für das flüssige Medium.

Die obige Fördervorrichtung erlaubt auf einfache Weise eine Abtrennung flüchtiger Komponenten aus dem flüssigen Medium, da die einzelnen Borsten der Bürste vom flüssigen Medium benetzt werden und somit als Verdunstungsoberfläche für das flüssige Medium dienen. Es steht somit eine sehr große Oberfläche für die Abscheidung flüchtiger Komponenten aus dem flüssigen Medium zur Verfügung.

Im Gegensatz zu den konventionellen Festbettanlagen kommt es durch die Elastizität der Borsten zu keinen oder nur geringen Inkrustierungen durch ausfallende Feststoffe auf den Borsten. Durch das Vorsehen zumindest eines in Richtung der Achse vorstehenden Teils im mittleren Bereich des Gehäuses, der derart ausgebildet ist, dass er mit der Bürste zumindest teilweise in Kontakt kommt, können die Borsten zusätzlich in Bewegung versetzt werden und die Inkrustierung der Bürste kann weiter verringert werden.

Durch das Vorsehen der Bürste und ihrer Drehbewegung kann das in die Vorrichtung eingebrachte flüssige Medium eine höhere Verweilzeit als z. B. in konventionellen Festbettanlagen aufweisen. Damit kann eine gründlichere Entfernung flüchtiger Komponenten aus dem flüssigen Medium erzielt werden. Durch Vorsehen zumindest eines in Richtung der Fördervorrichtung vorstehenden Teils kann zudem durch die Bewegung der Borsten ein feiner Nebel aus dem flüssigen Medium erzeugt werden, der eine zusätzliche Verdunstungsoberfläche für die im flüssigen Medium gelösten flüchtigen Komponenten bildet. Damit kann die Entfernung flüchtiger Komponenten aus dem flüssigen Medium weiter verbessert werden.

Mittels obiger Vorrichtung kann ebenso ein Gasstrom effektiv befeuchtet werden, da die einzelnen Borsten der Bürste eine große Verdunstungsoberfläche bereitstellen und der Luftstrom, der durch die Bürste geleitet wird, das verdunstete flüssige Medium mit sich führen kann. Die Vorrichtung kann vorteilhaft zur Befeuchtung von Luft mit Wasser verwendet werden, um beispielsweise ein angenehmes Raumklima zu erzeugen.

Durch das Vorsehen der Bürste und deren Drehbewegung hat das in die Vorrichtung eingebracht flüssige Medium eine hohe Verweilzeit und der eingebrachte Gasstrom kann somit effektiv befeuchtet werden. Durch das Vorsehen zumindest eines in Richtung der Fördervorrichtung vorstehenden Teils kann zudem durch die Bewegung der Borsten ein feiner Nebel aus dem flüssigen Medium erzeugt werden, der eine zusätzliche Verdunstungsoberfläche für das flüssige Medium bildet und somit eine höhere Sättigung des Gases mit dem flüssigen Medium ermöglicht.

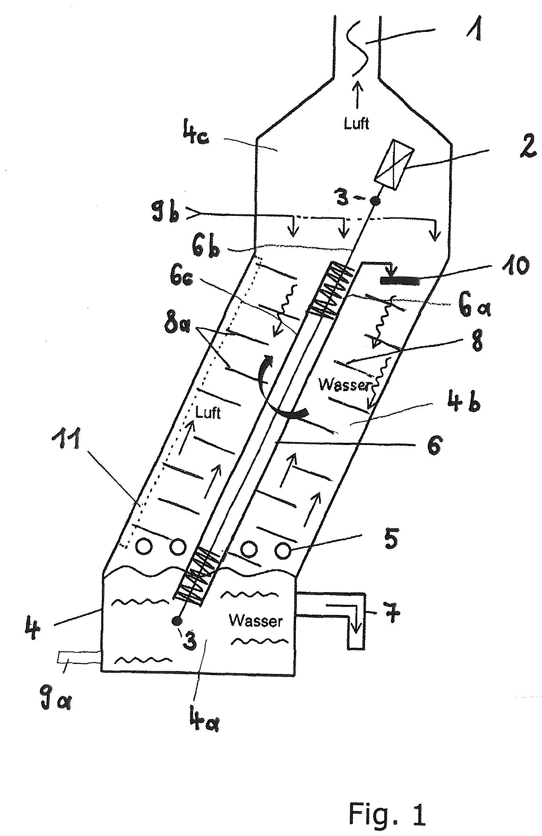

Weitere Eigenschaften und Vorteile der erfindungsgemäßen Vorrichtung und des erfindungsgemäßen Verfahrens werden anhand der nachfolgenden Beschreibung konkreter Ausführungsformen, in denen Bezug auf die Zeichnung genommen wird, deutlich gemacht. Dabei zeigt die Figur eine schematische Darstellung einer Ausführungsform der erfindungsgemäßen Vorrichtung.

Die in der Figur gezeigte Vorrichtung umfasst dabei ein Gehäuse 4 mit einem unteren Bereich 4a, einem mittleren Bereich 4b und einem oberen Bereich 4c. Dabei ist der mittlere Bereich 4b in Bezug auf den unteren Bereich 4a und den oberen Bereich 4c verkippt. Im Weiteren weist das Gehäuse Gaseinlässe 5 auf und ist am oberen Ende geöffnet, so dass ein Ventilator 1 angeordnet sein kann, um einen Gasstrom von den Gaseinlässen 5 zum oberen Bereich 4c der Vorrichtung zu erzeugen. Als Gas kann z. B. Luft, jedoch auch jedes weitere Gas bzw. Gasgemisch verwendet werden.

In der gezeigten vorteilhaften Ausführungsform weist die Vorrichtung mehrere erste Zuläufe 9b, die oberhalb einer Bürste 8 angeordnet sind, auf. Dadurch wird das Gehäuse 4 auch im mittleren Bereich 4b mit dem eingeleiteten flüssigen Medium benetzt und dient diesem als Verdunstungsoberfläche. Im Weiteren weist die Vorrichtung im unteren Bereich 4a einen zweiten Zulauf 9a für das flüssige Medium, beispielsweise Wasser oder ein Absorbens, sowie einen Ablauf 7 auf.

Die Bürste 8 ist an einem Rohr 6c einer Fördervorrichtung 6, die als archimedische Schraube ausgebildet ist, angebracht und umfasst Borsten 8a. Die Borsten 8a bestehen dabei bevorzugt aus einem elastischen Material und weisen besonders bevorzugt poröse Oberflächen auf. Die Borsten 8a können dabei auch hohl sein.

Die archimedische Schraube 6 verläuft parallel zum mittleren Bereich 4b der Vorrichtung und umfasst neben dem Rohr 6c eine Schnecke 6a und eine Antriebsachse 6b, die von einem Motor 2 angetrieben werden kann und mittels Lager 3 drehbar gelagert ist. Durch die Achse 6b sind sowohl die Schnecke 6a als auch das Rohr 6c drehbar. Dadurch, dass die Bürste 8 am Rohr 6c der archimedischen Schraube 6 angebracht ist, ist auch diese drehbar. Die Fördervorrichtung muss jedoch nicht als archimedische Schnecke ausgebildet sein. Verwendbar ist beispielsweise auch eine Fördervorrichtung, die eine andere Pumpvorrichtung beinhaltet.

Bei einem erfindungsgemäßen Betrieb der Vorrichtung wird ein flüssiges Medium über den Zulauf 9b und optional über den weiteren zweiten Zulauf 9a in den unteren Bereich 4a der Vorrichtung eingeleitet. In einem zweiten Schritt wird das im unteren Bereich 4a gesammelte flüssige Medium mittels der archimedischen Schraube 6 angehoben und einem Verteilungsmittel 10, das im oberen Bereich 4c des Gehäuses 4 angeordnet ist, zugeführt. Das Verteilungsmittel 10 verteilt dabei das angehobene flüssige Medium über der oberen Oberfläche der Bürste 8, so dass das flüssige Medium aufgrund der Schwerkraft durch die Bürste 8 in den unteren Bereich 4a zurückgeleitet wird.

Durch die Drehbewegung der archimedischen Schraube 6 wird gleichzeitig auch die Bürste 8 in Drehbewegung versetzt. Zudem wird durch den Ventilator 1 und die Gaseinlässe 5 ein Gasstrom von den Gaseinlässen 5 zum oberen Bereich 4c der Vorrichtung erzeugt.

Die Oberflächen der einzelnen Borsten 8a der Bürste 8 werden vom flüssigen Medium, das über der oberen Oberfläche der Bürste 8 verteilt wird, benetzt und dienen als Verdunstungsoberfläche für das flüssige Medium. Die Verdunstungsoberfläche kann somit im Vergleich zur Oberfläche des im unteren Bereich 4a der Vorrichtung gesammelten flüssigen Mediums um ein Vielfaches erhöht werden bei einer kompakten Bauform der Vorrichtung. Dadurch ist beispielsweise eine gründlichere Entfernung flüchtiger Substanzen aus dem flüssigen Medium möglich. Ebenso kann dadurch der Gasstrom effektiv mit dem flüssigen Medium befeuchtet werden und die Vorrichtung kann zur Befeuchtung von beispielsweise Luft verwendet werden.

Bei der Drehung der Bürste 8 schleifen die Borsten 8a über die Oberfläche des mittleren Bereichs 4b des Gehäuses 4. Durch die Elastizität der Borsten 8a und die kontinuierliche Bewegung der Borsten 8a kommt es zu keiner oder einer nur sehr geringen Inkrustierung der Borsten durch ausfallende Feststoffe des flüssigen Mediums, wodurch der Wartungsaufwand für die Vorrichtung im Vergleich zu beispielsweise einer Festbettanlage auf ein Minimum reduziert wird. Die Inkrustierung kann zusätzlich durch das Vorsehen zumindest eines in Richtung der Achse 6b vorstehenden Teils 11 im mittleren Bereich 4b des Gehäuses 4 reduziert werden, da der vorstehende Teil 11 zumindest teilweise mit den Borsten 8a der Bürste 8 in Kontakt kommt und diese zusätzlich zu Schwingbewegungen anregt. Durch die Schwingbewegung der Borsten 8a entsteht zusätzlich ein feiner Tröpfchennebel des flüssigen Mediums, der eine zusätzliche Verdunstungsoberfläche für das flüssige Medium bildet.

Durch das Vorsehen des zumindest einen vorstehenden Teils 11 ist somit eine noch gründlichere Entfernung flüchtiger Substanzen aus dem flüssigen Medium möglich. Das von flüchtigen Stoffen befreite flüssige Medium bewegt sich aufgrund der Schwerkraft in den unteren Bereich 4a der Vorrichtung zurück und kann über den Ablauf 7 abgeleitet werden.

Bei der Verwendung zur Befeuchtung von Gas bzw. Gasgemischen kann die Sättigung des Gases mit dem flüssigen Medium auf diese Weise weiter erhöht werden. Zur Erhöhung der Sättigung ist weiterführend auch das Erwärmen des in die Vorrichtung eingeleiteten Gases möglich. Ebenso kann das flüssige Medium erwärmt werden, um ein Verdunsten des flüssigen Mediums zu begünstigen.

In einer weitergehenden vorteilhaften Ausführungsform der Vorrichtung können der Bürstenkörper der Bürste 8 und das Rohr 6c einstückig ausgeführt sein. Dabei dient das Rohr 6c als Bürstenkörper für die Bürste 8 und die Borsten 8a sind direkt am Rohr 6c angebracht. Es ist dabei besonders vorteilhaft, wenn die Borsten 8a hohl sind und das Rohr 6c derart ausgebildet ist, dass die Borsten 8a unmittelbar mit dem in der archimedischen Schraube 6 beförderten flüssigen Medium gespeist werden können. Somit kann zum einen zusätzlich flüssiges Medium im mittleren Bereich 4b auf die Gehäusewand 4 aufgebracht werden, wodurch dieser zur Verdunstungsoberfläche für das flüssige Medium wird, und zum anderen, bei Vorsehung des vorstehenden Teils 11, zusätzlicher feiner Tröpfchennebel erzeugt werden. Dadurch ist beispielsweise eine besonders gründliche Entfernung flüchtiger Komponenten aus dem flüchtigen Medium möglich. Ebenso lässt sich dadurch die Sättigung von Gas bzw. Gasgemischen mit dem flüssigen Medium weiter erhöhen.

Das vom Ventilator 1 an der Oberseite der Vorrichtung ausgeblasene Gas kann beispielsweise flüchtige Komponenten, die aus dem flüssigen Medium abgeschieden wurden, enthalten, wobei diese gesammelt und anschließend beispielsweise aufbereitet, wiederverwendet oder entsorgt werden können.

Ebenso kann das vom Ventilator 1 an der Oberseite der Vorrichtung ausgeblasene Gas bzw. Gasgemisch mit dem verdunsteten flüssigen Medium versetzt sein und, im Falle von mit Wasser befeuchteter Luft, beispielsweise zur Erzeugung eines angenehmen Raumklimas verwendet werden.

## Patentansprüche

1. Vorrichtung für den Kontakt einer Gasphase mit einem flüssigen Medium, die Folgendes umfasst:
ein Gehäuse (4), mit einem unteren Bereich (4a), einem mittleren Bereich (4b) und einem oberen Bereich (4c);
zumindest einen Gaseinlass (5);
einen Ventilator (1);
zumindest einen ersten Zulauf (9b) für das flüssige Medium;
zumindest einen Ablauf (7), der im unteren Bereich (4a) angeordnet ist;
eine Fördervorrichtung (6), die geeignet ist, einen Teil des flüssigen Mediums vom unteren Bereich (4a) anzuheben; und
eine drehbare Bürste (8), die Borsten (8a) umfasst;
wobei der zumindest eine Gaseinlass (5) und der Ventilator (1) geeignet sind, einen Gasstrom von einem unteren Abschnitt der Vorrichtung zu einem oberen Abschnitt der Vorrichtung zu erzeugen;
in dem oberen Bereich (4c) des Gehäuses (4) ein Verteilungsmittel (10) vorgesehen ist, das geeignet ist, das flüssige Medium, welches durch die Fördervorrichtung (6) angehoben wird, über der Bürste (8) zu verteilen; und
der mittlere Bereich (4b) des Gehäuses im Wesentlichen rotationssymmetrisch, bevorzugt zylindrisch, ist und die Bürste (8) drehbar in den mittleren Bereich (4b) des Gehäuses eingepasst ist,
wobei die Vorrichtung weiterhin mindestens einen Antrieb (2, 3, 6b) umfasst, der geeignet ist, die Fördervorrichtung (6) anzutreiben und/oder die Bürste (8) zu drehen.

2. Vorrichtung gemäß Anspruch 1, wobei die Fördervorrichtung (6) als archimedische Schraube ausgebildet ist und die Bürste (8) an der Fördervorrichtung (6) angebracht ist und mit dieser drehbar ist.

3. Vorrichtung gemäß einem der Ansprüche 1 bis 2, wobei die Vorrichtung zumindest einen zweiten Zulauf (9a) für das flüssige Medium umfasst.

4. Vorrichtung gemäß einem der Ansprüche 1 bis 3, wobei die Vorrichtung im mittleren Bereich (4b) zumindest einen in Richtung der Fördervorrichtung (6) vorstehenden Teil (11) aufweist, der derart ausgebildet ist, dass er mit der Bürste (8) zumindest teilweise in Kontakt kommt.

5. Vorrichtung gemäß einem der Ansprüche 1 bis 4, wobei die Borsten (8a) aus einem elastischen Material bestehen.

6. Vorrichtung gemäß einem der Ansprüche 1 bis 5, wobei die Borsten (8a) eine poröse Oberfläche aufweisen.

7. Vorrichtung gemäß einem der Ansprüche 1 bis 6, wobei die Borsten (8a) hohl sind.

8. Vorrichtung gemäß Anspruch 7, wobei die Bürste (8) und die Fördervorrichtung (6) derart ausgebildet sind, dass die Borsten (8a) zumindest teilweise mit dem flüssigen Medium aus der Fördervorrichtung (6) gespeist werden.

9. Verfahren für den Kontakt einer Gasphase mit einem flüssigen Medium mit einer Vorrichtung gemäß einem der Ansprüche 1 bis 8, das folgende Schritte umfasst:
Einleiten des flüssigen Mediums in die Vorrichtung;
Anheben eines Teils des im unteren Bereich (4a) gesammelten flüssigen Mediums; und
Verteilen des angehoben flüssigen Mediums über der Bürste (8),
wobei die Bürste (8) rotiert; ein Gasstrom von einem unteren Abschnitt der Vorrichtung zu einem oberen Abschnitt der Vorrichtung durch den zumindest einen Gaseinlass (5) und den Ventilator (1) erzeugt wird; und das über der Bürste (8) verteilte flüssige Medium durch die Bürste (8), entgegen dem Gasstrom, in den unteren Bereich (4a) zurückgeleitet wird.

10. Verfahren gemäß Anspruch 9, wobei die Bürste (8) gemeinsam mit der Fördervorrichtung (6) rotiert.

## Claims

1. A device for the contact of a gas phase with a liquid medium, comprising the following:
a housing (4), having a lower region (4a), a central region (4b) and an upper region (4c);
at least one gas inlet (5);
a fan (1) ;
at least one first inflow (9b) for the liquid medium;
at least one outflow (7), which is arranged in the lower region (4a);
a conveying device (6), which is suitable for raising some of the liquid medium from the lower region (4a); and
a rotatable brush (8), which comprises bristles (8a) ;
wherein the at least one gas inlet (5) and the fan (1) are suitable for generating a gas stream from a lower portion of the device to an upper portion of the device;
a distributing means (10) is provided in the upper region (4c) of the housing (4), said distributing means being suitable for distributing over the brush (8) the liquid medium which is raised by the conveying device (6); and
the central region (4b) of the housing is essentially rotationally symmetrical, preferably cylindrical, and the brush (8) is fitted in a rotatable manner into the central region (4b) of the housing,
wherein the device also comprises at least one drive (2, 3, 6b), which is suitable for driving the conveying device (6) and/or rotating the brush (8) .

2. The device as claimed in claim 1, wherein the conveying device (6) is designed in the form of an Archimedean screw and the brush (8) is fitted on the conveying device (6) and can be rotated therewith.

3. The device as claimed in claim 1 or 2, wherein the device comprises at least one second inflow (9a) for the liquid medium.

4. The device as claimed in one of claims 1 to 3, wherein the device, in the central region (4b), has at least one part (11) which projects in the direction of the conveying device (6) and is designed such that at least part of it comes into contact with the brush (8).

5. The device as claimed in one of claims 1 to 4, wherein the bristles (8a) consist of an elastic material.

6. The device as claimed in one of claims 1 to 5, wherein the bristles (8a) have a porous surface.

7. The device as claimed in one of claims 1 to 6, wherein the bristles (8a) are hollow.

8. The device as claimed in claim 7, wherein the brush (8) and the conveying device (6) are designed such that the bristles (8a) are supplied, at least in part, with the liquid medium from the conveying device (8).

9. A method for the contact of a gas phase with a liquid medium, having a device as claimed in one of claims 1 to 8 and comprising the following steps:
directing the liquid medium into the device;
raising some of the liquid medium collected in the lower region (4a); and
distributing the raised liquid medium over the brush (8), wherein the brush (8) rotates; the at least one gas inlet (5) and the fan (1) generate a gas stream from a lower portion of the device to an upper portion of the device; and the liquid medium distributed over the brush (8) is directed back by way of the brush (8), counter to the gas stream, into the lower region (4a).

10. The method as claimed in claim 9, wherein the brush (8) rotates together with the conveying device (6).

## Revendications

1. Dispositif pour la mise en contact d'une phase gazeuse avec un milieu liquide, qui comprend les composants suivants:
une enceinte (4), avec une région inférieure (4a), une région médiane (4b) et une région supérieure (4c);
au moins une entrée de gaz (5);
un ventilateur (1);
au moins une première arrivée (9b) pour le milieu liquide;
au moins une évacuation (7), qui est disposée dans la région inférieure (4a);
un dispositif de transport (6), qui est approprié pour élever une partie du milieu liquide à partir de la région inférieure (4a); et
une brosse rotative (8), qui comprend des poils (8a); dans lequel ladite au moins une entrée de gaz (5) et le ventilateur (1) sont appropriés pour produire un courant de gaz depuis une partie inférieure du dispositif jusqu'à une partie supérieure du dispositif;
dans la région supérieure (4c) de l'enceinte (4) il est prévu un moyen de répartition (10), qui est approprié pour répartir au moyen de la brosse (8) le milieu liquide qui est élevé par le dispositif de transport (6); et
la région médiane (4b) de l'enceinte présente essentiellement la symétrie de rotation, est de préférence cylindrique et la brosse (8) est ajustée de façon rotative dans la région médiane (4b) de l'enceinte,
dans lequel le dispositif comprend en outre au moins un entraînement (2, 3, 6b), qui est approprié pour entraîner le dispositif de transport (6) et/ou faire tourner la brosse (8).

2. Dispositif selon la revendication 1, dans lequel le dispositif de transport (6) est constitué par une vis d'Archimède et la brosse (8) est montée sur le dispositif de transport (6) et peut tourner avec celui-ci.

3. Dispositif selon une des revendications 1 à 2, dans lequel le dispositif comprend au moins une seconde arrivée (9a) pour le milieu liquide.

4. Dispositif selon l'une quelconque des revendications 1 à 3, dans lequel le dispositif présente dans la région médiane (4b) au moins une partie (11) saillante en direction du dispositif de transport (6), qui est conçue de telle manière qu'elle vienne au moins partiellement en contact avec la brosse (8).

5. Dispositif selon l'une quelconque des revendications 1 à 4, dans lequel les poils (8a) sont constitués d'un matériau élastique.

6. Dispositif selon l'une quelconque des revendications 1 à 5, dans lequel les poils (8a) présentent une surface poreuse.

7. Dispositif selon l'une quelconque des revendications 1 à 6, dans lequel les poils (8a) sont creux.

8. Dispositif selon la revendication 7, dans lequel la brosse (8) et le dispositif de transport (6) sont conçus de telle manière que les poils (8a) soient alimentés au moins partiellement en milieu liquide à partir du dispositif de transport (6).

9. Procédé pour la mise en contact d'une phase gazeuse avec un milieu liquide avec un dispositif selon l'une quelconque des revendications 1 à 8, qui comprend les étapes suivantes:
introduire le milieu liquide dans le dispositif;
élever une partie du milieu liquide accumulé dans la région inférieure (4a); et
répartir le milieu liquide élevé au moyen de la brosse (8),
dans lequel on fait tourner la brosse (8); on produit un courant de gaz depuis une partie inférieure du dispositif jusqu'à une partie supérieure du dispositif au moyen de ladite au moins une entrée de gaz (5) et du ventilateur (1); et on renvoie dans la région inférieure (4a) le milieu liquide réparti par la brosse (8) à travers la brosse (8), contre le courant de gaz.

10. Procédé selon la revendication 9, dans lequel on fait tourner la brosse (8) de concert avec le dispositif de transport (6).
